# EUROPÄISCHE PATENTSCHRIFT

(11) **EP 0 687 364 B1**
(45) Veröffentlichungstag und Bekanntmachung des Hinweises auf die Patenterteilung: **07.01.1998**
(21) Anmeldenummer: 94908275.4
(22) Anmeldetag: 25.02.1994
(51) Int. Cl.: G02B 6/38, G02B 6/44

(54) **OPTISCHES VERBINDUNGSKABEL**
OPTICAL CONNECTING CABLE
CABLE OPTIQUE DE LIAISON

(30) Priorität: 04.03.1993 DE 4307272
(43) Veröffentlichungstag der Anmeldung: 20.12.1995
(73) Patentinhaber: SIEMENS AKTIENGESELLSCHAFT, 80333 München (DE)
(72) Erfinder: FAIST, Eugen, D-13437 Berlin (DE); FRÖSCHER, Peter, D-13629 Berlin (DE); FIGGE, Matthias, D-13437 Berlin (DE)
(86) Internationale Anmeldenummer: DE9400218
(87) Internationale Veröffentlichungsnummer: WO9420872

(56) Entgegenhaltungen:
- EP-A- 0 001 117
- EP-A- 0 355 639
- EP-A- 0 375 168
- EP-A- 0 413 548
- GB-A- 2 165 661
- US-A- 4 712 861
- US-A- 4 826 277
- US-A- 5 074 021
- PATENT ABSTRACTS OF JAPAN vol. 8, no. 228 (P-308) (1665) 19. Oktober 1984 & JP,A,59 109 012 (SEIKO) 23. Juni 1984
- PATENT ABSTRACTS OF JAPAN vol. 8, no. 1 (P-246) (1438) 6. Januar 1984 & JP,A,58 166 311 (FUJITSU) 1. Oktober 1983

## Beschreibung

Die Erfindung betrifft ein optisches Verbindungskabel mit mindestens einem optischen Wellenleiter und mit einer strangförmigen Zugentlastung, das zumindest an einem ersten Ende aufweist:
- ein Zugentlastungs-Endstück, mit dem ein Ende der Zugentlastung verbunden ist,
- ein Verbinder-Gehäuse, in dem das Zugentlastungs-Endstück angeordnet ist, und
- ein an dem Verbinder-Gehäuse angeordnetes Kopplungsteil zum optischen Ankoppeln des optischen Wellenleiters.

Aus der EP-A2-0 413 548 ist ein Verbindungsmodul zum Abschluß und zur Kopplung eines in einem optischen Verbindungskabel enthaltenen optischen Wellenleiters bekannt. Das Verbindungsmodul enthält ein einzelnes Kopplungsteil in Form eines Steckers mit einem rückwärtigen kurzen Wellenleiterstück. In die gegenüberliegenden Öffnungen eines mechanischen Spleißes sind das kopplungsteilfreie Ende des kurzen Wellenleiterstücks und das freie Ende eines zu verbindenden optischen Wellenleiters eines optischen Verbindungskabels einführbar. Der Spleiß wird beim Schließen eines Abdeckhebels unter gleichzeitiger Festlegung der Wellenleiterenden fixiert. Das optische Verbindungskabel enthält offenbar keine Zugentlastung; das in den Spleiß eingeführte, zu verbindende Wellenleiterende ist gegen Zugbelastungen nicht geschützt, so daß auf das Verbindungskabel einwirkende Zugkräfte zu einer Funktionsbeeinträchtigung oder Zerstörung führen können.

Bei einem bekannten (EP-A1-0 375 168) optischen Verbindungskabel der eingangs genannten Art mit zwei optischen Wellenleitern und einer Zugentlastung sind die Enden der optischen Wellenleiter zumindest an einem Kabelende unmittelbar mit Kopplungsteilen in Form von Keramikstiften versehen. Die Keramikstifte sind in einem kabelendseitigen Verbindergehäuse gefedert gelagert. Jeder Keramikstift hat eine zentrale Längsbohrung, die das erste Ende des optischen Wellenleiters aufnimmt. Ein Flansch des Endstücks ist in eine Nut in dem Verbinder-Gehäuse eingelegt.

Um bei dem bekannten Verbindungskabel die Einhaltung einer vorgegebenen Sollänge zu gewährleisten, müssen enge Toleranzen hinsichtlich der Wellenleiterlängen eingehalten werden. Bearbeitungsvorgänge, die nach Einbringen der optischen Wellenleiter in die Kopplungsteile zu Beschädigungen führen oder fehlerhaft Kopplungsteile führen zum Ausschuß des gesamten bisher montierten Verbindungskabels. Auch ist dieses Verbindungskabel für eine einfache Feldmontage (d.h. Anbringen von Kopplungsteilen bei einer Installation oder Reparatur vor Ort, z. B. in Kabelschächten) nicht gut geeignet.

In diesem Zusammenhang ist aus der älteren deutschen Patentanmeldung P 41 42 905.2 ein optisches Verbindungskabel mit einem Wellenleiter bekannt, mit dessen Enden separat gefertigte Wellenleiter-Anschlußstücke verspleißt sind. Die Spleißstellen sind jeweils in dem Verbinder-Gehäuse untergebracht. Die vergleichsweise empfindlichen Spleißstellen sind äußeren Einwirkungen verhältnismäßig schutzlos ausgeliefert. Wenn der zwischen Kopplungsteil und Zugentlastungs-Endstück liegende Abschnitt mit der Spleißstelle gewunden oder gekrümmt gelagert wird, entstehen zusätzlich Belastungen für die Spleißstellen.

Die der Erfindung zugrundeliegende Aufgabe besteht daher in der Schaffung eines einfach und wirtschaftlich herstellbaren optischen Verbindungskabels mit einer besonders hohen Betriebssicherheit.

Diese Aufgabe wird bei einem optischen Verbindungskabel der eingangs genannten Art erfindungsgemäß dadurch gelöst, daß das erste Ende eines Wellenleiterstücks mit dem Kopplungsteil versehen ist, daß das zweite, kopplungsteilfreie Ende des Wellenleiterstücks mit dem ersten Ende des Wellenleiters an einer Spleißstelle verbunden ist und daß die Spleißstelle und das Ende der Zugentlastung gemeinsam in dem Zugentlastungs-Endstück festgelegt sind. Ein wesentlicher Vorteil des erfindungsgemäßen optischen Kabels besteht darin, daß die Herstellung der besonders fertigungskritischen Kopplungsteile unabhängig und bedarfsweise räumlich getrennt von dem optischen Wellenleiter des Verbindungskabels erfolgen kann. Damit stehen zur Koppelstirnflächenbearbeitung auch Verfahren mit rotierendem Werkstück zur Verfügung. Vorzugsweise können mehrere Wellenleiterstücke gleichzeitig bearbeitet werden und ein Ausgleich von Konfektionierungstoleranzen des optischen Wellenleiters in dem Verbindungskabel erfolgen. Bei fehlerhafter Herstellung oder Bearbeitung der Kopplungsteile ist nur das Kopplungsteil mit dem Wellenleiterstück zu verwerfen. Eine Komplettierung oder Reparatur ist auch vor Ort mit einfacher Ausrüstung möglich.

Ein ganz besonderer Vorteil besteht darin, daß die gegen äußere Einflüsse empfindlichen Spleißstellen - bevorzugt in einem einzigen Arbeitsgang - gemeinsam mit den jeweiligen Enden der Zugentlastungen in dem jeweiligen Gehäuse fixiert sind. Dadurch sind die Spleißstellen ohne aufwendige zusätzliche Maßnahmen und Bauteile gegen äußere Belastungen weitestgehend geschützt.

Eine fertigungstechnisch besonders vorteilhafte Fortbildung der Erfindung sieht vor, daß das Ende der Zugentlastung zusammen mit der Spleißstelle von einem spritzbaren, härtbaren oder härtenden Werkstoff unter Bildung des Zugentlastungs-Endstücks umgeben ist. Diese Ausgestaltung der Erfindung bietet den Vorteil, daß die Spleißstellen relativ zu der Zugentlastung festgelegt sind und besonders wirksam vor äußeren Einflüssen geschützt sind. Als Werkstoff kann ein schnell erhärtender Spritzgußwerkstoff (z. B. Styrol oder ein Polyamid) oder ein Harzsystem verwendet werden.

Die Enden der Zugentlastung können bevorzugt zusammen mit den Spleißstellen in eine gemeinsame Gußform eingebracht und anschließend von dem Werkstoff unter Bildung eines Formteils zur Zugabfangung umgeben werden.

Eine vorteilhafte Ausgestaltung der Erfindung besteht darin, daß das Zugentlastungs-Endstück eine auf die Außendurchmesser des Wellenleiters und des Wellenleiterstücks abgestimmte Durchgangsbohrung aufweist, daß die Durchgangsbohrung eine Ausnehmung durchdringt, und daß die Spleißstelle in der Ausnehmung fixiert ist. Mit der Durchgangsbohrung werden die zu verspleißenden Wellenleiterenden axial ausgerichtet. Die Spleißstelle kann in der Ausnehmung beispielsweise durch Lichtbogenschweißen oder Verkleben gebildet werden. Dies ist auch bei einer Montage oder Reparatur vor Ort besonders einfach möglich, da die Ausnehmung einen besonders leichten Zugang und eine optische Kontrolle der Spleißstelle erlaubt. Zum weiteren Schutz der gebildeten Spleißstelle ist es vorteilhaft, die Ausnehmung unter Festlegung der Spleißstelle anschließend zu vergießen.

Fertigungstechnisch hat sich ein im Bereich der Ausnehmung angeordnetes Federelement als vorteilhaft erwiesen, das das erste Ende des Wellenleiters und das kopplungsteilfreie Ende des Wellenleiterstücks zumindest vor Bildung der Spleißstelle fixiert. Die zu verbindenden Wellenleiterenden können dazu in dem Zugentlastungs-Endstück zumindest im Bereich der Ausnehmung in einer von zwei prismatischen Erhebungen gebildeten V-förmigen Nut ausgerichtet und gelagert sein; die zu verbindenden Wellenleiterenden können so bevorzugt von oben in die Nut eingelegt werden.

Das Federelement ist gemäß einer vorteilhaften Ausgestaltung der Erfindung besonders kompakt und leicht zu lagern, wenn es als Blattfeder mit einer Aussparung ausgebildet ist und das erste Ende des Wellenleiters und das kopplungsteilfreie Ende des Wellenleiterstücks von gegenüberliegenden Kanten der Aussparung federkraftbeaufschlagt sind.

Vorzugsweise können beidseitig und symmetrisch zur Ausnehmung zur Durchgangsbohrung im wesentlichen senkrechte Zugangsbohrungen vorgesehen sein, die in die Duchgangsbohrung münden und in die Stopfen einsetzbar sind. Die Stopfen fixieren das erste Ende des Wellenleiters und das kopplungsteilfreie Ende des Wellenleiterstücks zumindest vor Bildung der Spleißstelle.

Die Erfindung wird nachfolgend beispielhaft anhand einer Zeichnung näher erläutert; es zeigen:
Figur 1 ein Kopplungsteil mit einem Wellenleiterstück,
Figur 2 ein Ende einer ersten Ausführung eines optischen Verbindungskabels,
Figur 3 ein Ende einer zweiten Ausführung eines optischen Verbindungskabels mit einem Gehäuse,
Figur 4 ein Zugentlastungs-Endstück,
Figuren 5A, 5B, 5C ausschnittsweise ein Zugentlastungs-Endstück mit einem Federelement und
Figuren 6A, 6B, 6C ausschnittsweise ein weiteres Zugentlastungs-Endstück.

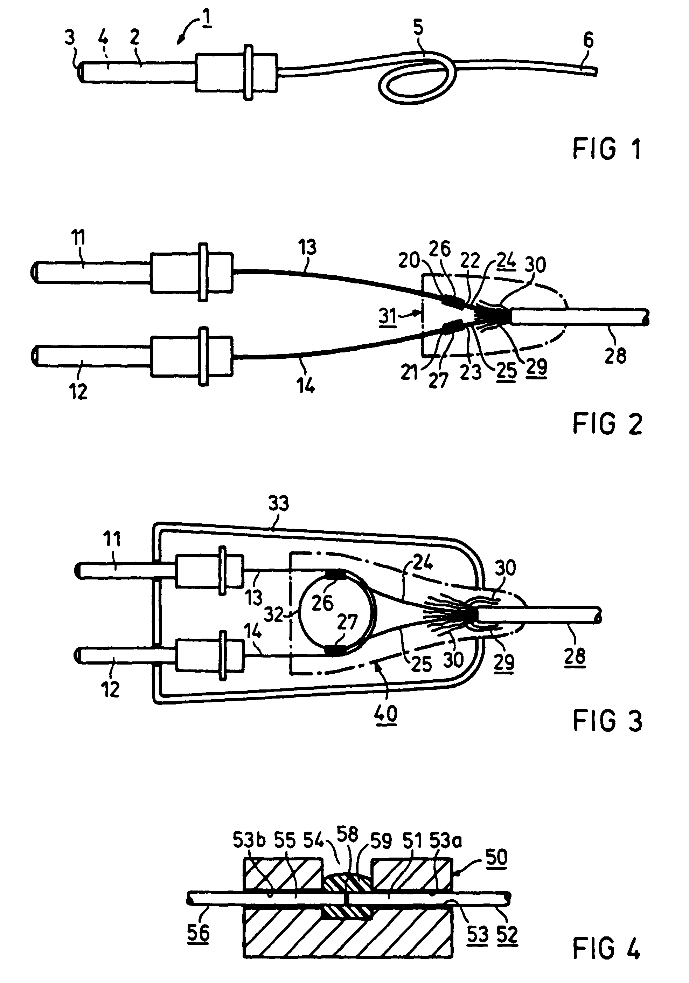

Ein in Figur 1 gezeigtes Wellenleiter-Anschlußstück 1 umfaßt ein Kopplungsteil (Keramikstift) 2 mit einer balligen Stirnfläche 3 und mit einer zentrischen Bohrung, in die das erste Ende 4 eines einzelnen Wellenleiterstücks 5 eingeführt ist. Die Endfläche des Endes 4 schließt mit der Stirnfläche 3 ab. Das zweite, kopplungsteilfreie Ende 6 des Wellenleiterstückes 5 ist zur Verschweißung mit einem optischen Wellenleiter eines optischen Verbindungskabels vorgesehen.

Figur 2 zeigt zwei Kopplungsteile 11, 12 gemäß Figur 1 mit jeweils einem Wellenleiterstück 13, 14. Deren kopplungsteilfreie Enden 20, 21 sind jeweils mit einem ersten Ende 22, 23 von optischen Wellenleitern 24, 25 an Spleißstellen 26, 27 verschweißt. Die optischen Wellenleiter 24, 25 sind Bestandteil eines optischen Verbindungskabels 28, in dem eine strangförmige Zugentlastung 29 aus Aramid-Fasern verläuft. Das Ende 30 der Zugentlastung 29 ist gemeinsam mit den Spleißstellen 26, 27 in einem Zugentlastungs-Endstück 31 angeordnet, das aus einem spritzbaren und/oder ausgehärteten Werkstoff besteht.

Figur 3 zeigt den kabelendseitigen Bereich einer weiteren Ausführungsform eines erfindungsgemäßen optischen Verbindungskabels, wobei in Figur 2 bereits gezeigte Bestandteile mit denselben Bezugszeichen versehen sind. Bei diesem Ausführungsbeispiel sind die optischen Wellenleiter 24, 25 des Verbindungskabels 28 und überschüssige Längen der jeweiligen Wellenleiterstücke 13, 14 in Windungen 32 vollständig in einem Verbinder-Gehäuse 33 gelagert. Der Durchmesser der Windungen 32 unterschreitet einen wellenleiterspezifischen Mindestkrümmungsradius nicht. Das Verbinder-Gehäuse 33 dient gleichzeitig als Aufnahme für die Kopplungsteile 11, 12 und fixiert ein Zugentlastungs-Endstück 40, das die Spleißstellen 26, 27, die Windungen 32 und das Ende 30 der Zugentlastung 29 enthält. Das Ende 30 kann teilweise oder vollständig auch über den Mantel des Verbindungskabels 28 zurückgeworfen und in dieser Position fixiert sein. Die Spleißstellen 26, 27 sind also bei den Beispielen gemäß Figur 2 bzw. 3 jeweils gemeinsam mit dem Ende 30 der Zugentlastung 29 in dem Zugentlastungs-Endstück 40 fixiert.

Die jeweils anderen (zweiten) Enden der optischen Wellenleiter 24, 25 und das zweite Ende der Zugentlastung können in einer den Figuren 2 und 3 entsprechenden Weise ausgestaltet sein, wobei selbstverständlich auch Kopplungsteile in abgewandelter Form - z. B. in Form von Buchsen - verwendet werden können.

Figur 4 zeigt eine im Vergleich zu den Figuren 2 und 3 abgewandelte Ausführungsform eines Zugentlastungs-Endstücks 50. Das Zugentlastungs-Endstück 50 ist in der Ebene des Endes 51 eines kabelseitigen optischen Wellenleiters 52 geschnitten dargestellt. Das Ende 51 ist in einen ersten Abschnitt 53a einer Durchgangsbohrung 53 eingebracht. Die Durchgangsbohrung 53 durchdringt eine Ausnehmung 54 und setzt sich mit einem zweiten Abschnitt 53b fort. Der zweite Abschnitt 53b enthält das kopplungsteilfreie Ende 55 eines Wellenleiterstücks 56. Die Duchgangsbohrung 53 gewährleistet eine axiale Flucht des Endes 51 mit dem kopplungsteilfreien Ende 55 und ist auf die Außendurchmesser des Wellenleiters 52 und des Wellenleiterstücks 56 abgestimmt. Das Ende 51 und das kopplungsteilfreie Ende 55 sind unter Bildung einer Spleißstelle 58 in der Ausnehmung 54 mittels Laserstrahlschweißung verbunden. Die Spleißstelle 58 ist zum weiteren Schutz mit einer Vergußmasse 59 umgeben, die nach Bildung der Spleißstelle 58 in die Ausnehmung 54 eingebracht ist.

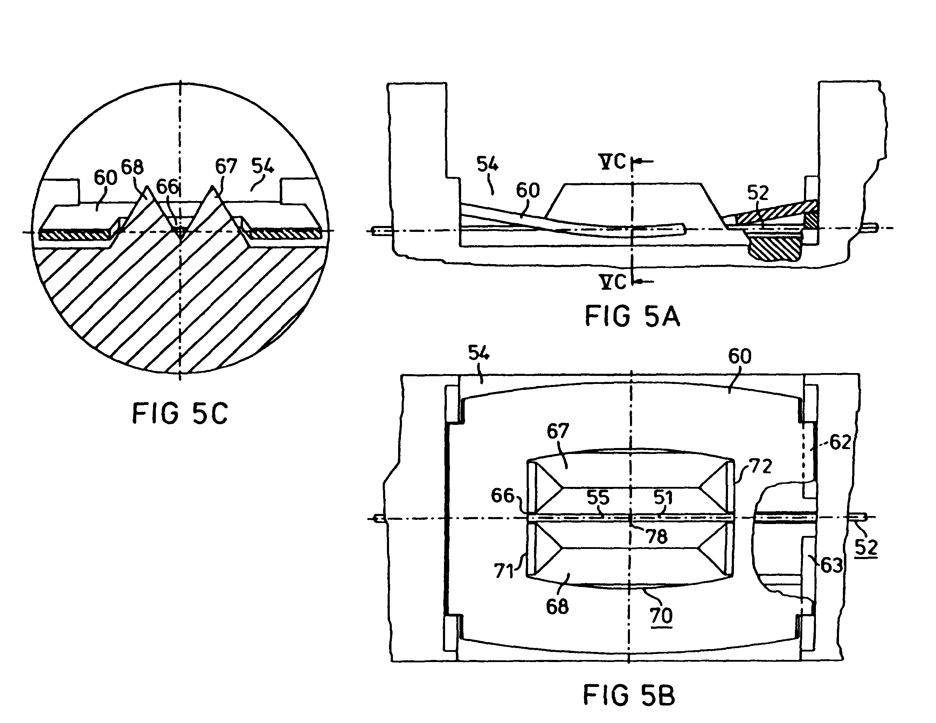

Die Figuren 5A, 5B und 5C zeigen ausschnittsweise die Ausnehmung 54, in der ein Federelement in Form einer Blattfeder 60 in Hinterschneidungen 62, 63 gelagert ist. Das kopplungsteilfreie Ende 55 und das Ende 51 des optischen Wellenleiters 52 sind im Bereich der Ausnehmung 54 in eine V-förmige Nut 66 eingelegt, deren Seiten von Seitenflächen prismatischer Erhebungen 67, 68 gebildet sind.

Die Blattfeder 60 ist in Richtung auf die Nut 66 vorgespannt und hat eine Aussparung 70. Das kopplungsteilfreie Ende 55 ist von einer Kante 71 der Aussparung 70 federbeaufschlagt; eine gegenüberliegende Kante 72 beaufschlagt das Ende 51 mit einer entsprechenden Federkraft. Dadurch sind die Enden 55 und 51 in der Nut 66 vorfixiert und dennoch leicht zugänglich und können in dieser Lage einfach z. B. durch Lichtbogenschweißung miteinander unter Bildung der Spleißstelle 78 verbunden werden.

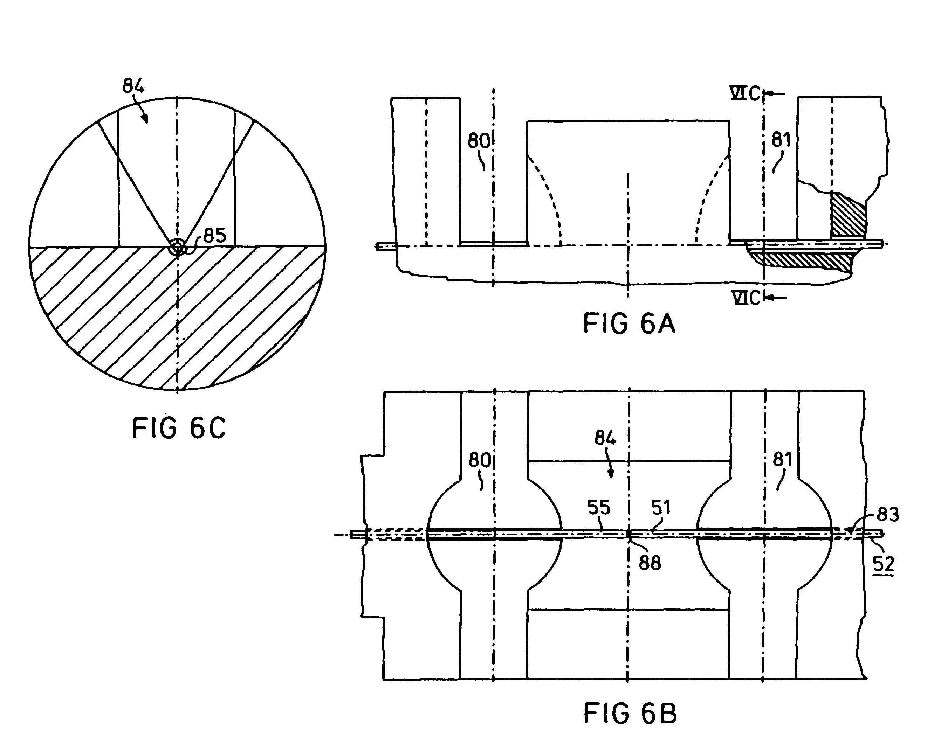

Die Figuren 6A, 6B und 6C zeigen eine alternative Fixierungsmöglichkeit der Enden 51, 55. Beidseitig einer Ausnehmung 84 sind Zugangsbohrungen 80, 81 vorgesehen, die im wesentlichen senkrecht zur Durchgangsbohrung 83 verlaufen und in die Durchgangsbohrung 83 münden. In die Zugangsbohrungen 80, 81 sind nicht gezeigte Elastomer-Stopfen einsetzbar, die die Enden 51, 55 in eine Nut 85 pressen und fixieren. Die gut zugängliche und sichtbare Spleißstelle 88 kann in beschriebener Weise dann im Bereich der Ausnehmung 84 erzeugt werden.

Das erfindungsgemäße optische Verbindungskabel erlaubt eine separate Herstellung und Bearbeitung der Wellenleiterstücke, die jeweils mit einem anwendungsspezifisch konfektionierten, optischen Wellenleiter eines Verbindungskabels verbunden werden. Die vollständige Speicherung überschüssiger Wellenleiterlängen (Figur 3) ermöglicht einen weitestgehenden Ausgleich von Fertigungstoleranzen, wobei die Spleißstellen gegen Zugbeanspruchung und vor äußeren Belastungen bestens geschützt sind.

## Patentansprüche

1. Optisches Verbindungskabel mit mindestens einem optischen Wellenleiter (24) und mit einer strangförmigen Zugentlastung (29), das zumindest an einem ersten Ende aufweist:
- ein Zugentlastungs-Endstück (31), mit dem ein Ende (30) der Zugentlastung (29) verbunden ist,
- ein Verbinder-Gehäuse (33), in dem das Zugentlastungs-Endstück (31) angeordnet ist,
- und ein an dem Verbinder-Gehäuse (33) angeordnetes Kopplungsteil (11,12) zum optischen Ankoppeln des optischen Wellenleiters (24),
**dadurch gekennzeichnet, daß**
- das erste Ende eines Wellenleiterstücks (13) mit dem Kopplungsteil (11) versehen ist,
- das zweite, kopplungsteilfreie Ende (26) des Wellenleiterstücks (13) mit dem ersten Ende (22) des Wellenleiters (24) an einer Spleißstelle (26) verbunden ist und daß
- die Spleißstelle (26) und das Ende (30) der Zugentlastung (29) gemeinsam in dem Zugentlastungs-Endstück (31) festgelegt sind.

2. Optisches Verbindungskabel nach Anspruch 1,
**dadurch gekennzeichnet, daß** das Ende (30) der Zugentlastung (29) zusammen mit der Spleißstelle (26) von einem spritzbaren, härtbaren oder härtenden Werkstoff unter Bildung des Zugentlastungs-Endstücks (31) umgeben ist.

3. Optisches Verbindungskabel nach Anspruch 1,
**dadurch gekennzeichnet, daß** das Zugentlastungs-Endstück (50) eine auf die Außendurchmesser des Wellenleiters (52) und des Wellenleiterstücks (56) abgestimmte Durchgangsbohrung (53a, 53b) aufweist, daß die Durchgangsbohrung (53a, 53b) eine Ausnehmung (54) durchdringt und daß die Spleißstelle (58) in der Ausnehmung (54) fixiert ist.

4. Optisches Verbindungskabel nach Anspruch 3,
**dadurchgekennzeichnet, daß** die Ausnehmung (54) unter Festlegung der Spleißstelle (58) vergossen ist.

5. Optisches Verbindungskabel nach Anspruch 3 oder 4,
**gekennzeichnet durch** ein im Bereich der Ausnehmung (54) angeordnetes Federelement (60), das das erste Ende (51) des Wellenleiters (52) und das kopplungsteilfreie Ende (55) des Wellenleiterstücks (56) zumindest vor Bildung der Spleißstelle (78) fixiert.

6. Optisches Verbindungskabel nach Anspruch 5,
**dadurch gekennzeichnet, daß** d as Federelement (60) eine Blattfeder mit einer Aussparung (70) ist und daß das erste Ende (51) des Wellenleiters (52) und das kopplungsteilfreie Ende (55) des Wellenleiterstücks (56) von gegenüberliegenden Kanten (71, 72) der Aussparung (70) federkraftbeaufschlagt sind.

7. Optisches Verbindungskabel nach Anspruch 3 oder 4,
**gekennzeichnet durch** zur Durchgangsbohrung (83) im wesentlichen senkrechte Zugangsbohrungen (80,81), die in die Durchgangsbohrung (83) münden und in die Stopfen einsetzbar sind, die das erste Ende (51) des Wellenleiters (52) und das kopplungsteilfreie Ende (55) des Wellenleiterstücks (56) zumindest vor Bildung der Spleißstelle (88) fixieren.

## Claims

1. An optical connecting cable with at least one optical waveguide (24) and a strand-like strain relief device (29) which, at least at a first end, comprises:
- a strain relief terminal component (31) to which one end (30) of the strain relief device (29) is connected,
- a connector housing (33) in which the strain relief terminal component (31) is arranged,
- and a coupling member (11, 12), arranged on the connector housing (33), for the optical coupling of the optical waveguide (24),
characterised in that
- the first end of a waveguide element (13) is provided with the coupling member (11),
- the second end (26), which is free of the coupling member, of the waveguide element (13) is connected to the first end (22) of the waveguide (24) at a splice (26) and
- the splice (26) and the end (30) of the strain relief device (29) are commonly fixed in the strain relief terminal component (31).

2. An optical connecting cable according to Claim 1, characterised in that the end (30) of the strain relief device (29), together with the splice (26), is surrounded by an injection-mouldable, hardenable or hardening material to form the strain relief terminal component (31).

3. An optical connecting cable according to Claim 1, characterised in that the strain relief terminal component (50) has a through-bore (53a, 53b) which is adapted to the outer diameter of the waveguide (52) and the waveguide element (56), that the through-bore (53a, 53b) penetrates through a recess (54), and that the splice (58) is fixed in the recess (54).

4. An optical connecting cable according to Claim 3, characterised in that the recess (54) is sealed, thereby fixing the splice (58).

5. An optical connecting cable according to Claim 3 or 4, characterised by a spring element (60) which is arranged in the region of the recess (54) and which fixes the first end (51) of the waveguide (52) and the end (55), which is free of the coupling member, of the waveguide element (56) at least prior to the formation of the splice (78).

6. An optical connecting cable according to Claim 5, characterised in that the spring element (60) is a leaf spring with a cavity (70) and that the first end (51) of the waveguide (52) and the end (55), which is free of the coupling member, of the waveguide element (56) are subjected to spring force by oppositely disposed edges (71, 72) of the cavity (70).

7. An optical connecting cable according to Claim 3 or 4, characterised by access bores (80, 81) which extend substantially at right angles to the through-bore (83) and which lead into the through-bore (83) and into which stoppers are insertable, which stoppers fix the first end (51) of the waveguide (52) and the end (55), which is free of the coupling member, of the waveguide element (56) at least prior to the formation of the splice (88).

## Revendications

1. Câble de liaison optique qui comporte au moins un guide (24) d'ondes optique et un dispositif (29) de détente de traction en forme de bande et qui comporte au moins à une première extrémité :
- un embout (31) pour le dispositif de détente de traction, auquel est reliée une extrémité (30) du dispositif (29) de détente de traction,
- un boîtier (33) de connecteur, dans lequel est monté l'embout (31) pour le dispositif de détente de traction,
- et une pièce (11, 12) de couplage montée sur le boîtier (33) de connecteur, pour le couplage optique du guide (24) d'ondes optique, caractérisé en ce que
- la première extrémité d'un tronçon (13) de guide d'ondes est munie de la pièce (11) de couplage,
- la deuxième extrémité (26), exempte de pièce de couplage, du tronçon (13) de guide d'ondes est reliée sur une épissure (26) à la première extrémité (22) du guide (24) d'ondes, et en ce que
- l'épissure (26) et l'extrémité (30) du dispositif (29) de détente de traction sont fixées conjointement dans l'embout (31) pour le dispositif de détente de traction.

2. Câble de liaison optique suivant la revendication 1, caractérisé en ce que l'extrémité (30) du dispositif (29) de détente de traction est entourée, conjointement avec l'épissure (26), d'une matière extrudable, durcissable ou durcissante, tout en formant l'embout (31) pour le dispositif de détente de traction.

3. Câble de liaison optique suivant la revendication 1, caractérisé en ce que l'embout (50) pour le dispositif de détente de traction comporte un perçage (53a, 53b) de passage adapté au diamètre extérieur du guide (52) d'ondes et du tronçon (56) de guide d'ondes, en ce que le perçage (53a, 53b) de passage traverse un évidement (54) et en ce que l'épissure (58) est immobilisée dans l'évidement (54).

4. Câble de liaison optique suivant la revendication 3, caractérisé en ce que l'évidement (54) est scellé, tout en fixant l'épissure (58).

5. Câble de liaison optique suivant la revendication 3 ou 4, caractérisé par un élément (60) élastique qui est monté dans la zone de l'évidement (54) et qui immobilise la première extrémité (51) du guide (52) d'ondes et l'extrémité (55) exempte de pièce de couplage du tronçon (56) de guide d'ondes au moins avant que l'épissure (78) ne soit formée.

6. Câble de liaison optique suivant la revendication 5, caractérisé en ce que l'élément (60) élastique est un ressort à lames comportant un évidement (70) et en ce que la première extrémité (51) du guide (52) d'ondes et l'extrémité (55), exempte de pièce de couplage, du tronçon (56) de guide d'ondes sont soumises à une force élastique par des bords (71, 72) opposés de l'évidement (70).

7. Câble de liaison optique suivant la revendication 3 ou 4, caractérisé par des perçages (80, 81) d'accès sensiblement perpendiculaires au perçage (83) de passage qui débouchent dans le perçage (83) de passage et dans lesquels peuvent être introduits des bouchons qui immobilisent, au moins avant que l'épissure (88) ne soit formée, la première extrémité (51) du guide (52) d'ondes et l'extrémité (55), exempte de pièce de couplage, du tronçon (56) de guide d'ondes.
